# EUROPEAN PATENT SPECIFICATION

(11) **EP 1 710 919 B1**
(45) Date of publication and mention of the grant of the patent: **24.09.2008**
(21) Application number: 05252106.9
(22) Date of filing: 04.04.2005
(51) Int. Cl.: H04B 1/10

(54) **Mobile wireless communications device having improved antenna impedance match and antenna gain**
Mobiles drahtloses kommunikationsgerät mit verbesserter antennenimpedanzanpassung und verbessertem antennengewinn
Dispositif de communication mobile sans fil à adaptation d'impédance et gain d'antenne améliorés

(43) Date of publication of application: 11.10.2006
(73) Proprietor: Research In Motion Limited, Waterloo, Ontario N2L 3W8 (CA)
(72) Inventor: Zhu, Lizhong, Waterloo, Ontario, N2T 2T8 (CN); Qi, Yihong, Waterloo, Ontario, N2T 2H3 (CN); Corrigan, Michael, Waterloo, Ontario, N2T 2K7 (CN); Bandurska, Krystyna, Waterloo, Ontario, N2T 2K7 (CN); Man, Ying Tong, Kitchener, Ontario, N2T 2H3 (CN)
(74) Representative: Roberts, Gwilym Vaughan

(56) References cited:
- EP-A- 0 805 562
- EP-A- 1 467 434
- US-A- 5 117 073
- US-A1- 2002 106 091
- US-A1- 2003 202 664
- US-A1- 2004 081 099
- US-A1- 2004 208 334
- US-B1- 6 742 185

## Description

### Field of the Invention

The present invention relates to the field of communications devices, and more particularly, to mobile wireless communications devices and related methods.

### Background of the Invention

Cellular communication systems continue to grow in popularity and have become an integral part of both personal and business communications. Cellular telephones allow users to place and receive phone calls most anywhere they travel. Moreover, as cellular telephone technology is increased, so too has the functionality of cellular devices. For example, many cellular devices now incorporate Personal Digital Assistant (PDA) features such as calendars, address books, task lists, calculators, memo and writing programs, etc. These multi-function devices usually allow users to wirelessly send and receive electronic mail (email) messages and access the internet via a cellular network and/or a wireless local area network (WLAN), for example.

As the functionality of cellular communications devices increases, the demand increases for smaller devices that are easier and more convenient for users to carry. As any circuit boards and electronic components thereon are reduced in size and placed closer together, including antenna and microphone components, various electronic components pick-up conductive energy and create interference within the system. For example, an internal audio transducer, for example, a receiver speaker, such as a speaker surface mounted on the circuit board, could pick-up conducted energy directly from a power amplifier, from the radiated energy emitted by an antenna or from other circuitry and, as a result, create an audible buzz within the speaker. This unwanted reception of conducted/near field radiated energy from any power amplifiers, antennae and RF or other circuitry is particularly problematic in a packet burst transmission as part of a Global System for Mobile communications (GSM) system, including the 450 MHz, 900 MHz, 1800 MHz and 1900 MHz frequency bands. Other interfering signals that could create an audible buzz in the speaker could be generated when the liquid crystal display (LCD) in some mobile wireless communications devices radiates radio frequency (RF) interfering energy. Interfering energy could also be generated by the microprocessor or another similar central processing unit (CPU).

Other problems occur when the antenna impendence match is detuned and antenna gain is degraded by the coupling of adjacent electronic components, for example, the receiver speaker relative to the antenna. It would be desirable to improve antenna performance of the mobile wireless communications device by blocking RF current from being coupled to the ground plane of the printed circuit board through adjacent electronic components. For example, the receiver is typically located close to the antenna and couples RF energy from the antenna to the ground plane, detuning an antenna impedance match and degrading antenna gain.

US-A-2002/0106031 discloses a microphone assembly comprising a casing having a sound inlet port and an acoustic transducer as well as a pre-amplifier and analog-to-digital converter within the casing. The casing may be metallic or having a metallic coating or layer so as to establish a Faraday case. GB 2381956 discloses an arrangement for suppressing ratio interference in an audio circuit of a ratio communication device.

### Summary of the Invention

The present invention is defined by the features of independent claim 1. A mobile wireless communications device of the present invention includes a housing and a circuit board having a ground plane and carried by the housing. Radio frequency (RF) circuitry and a processor are operative with each other and carried by the circuit board, typically, for example, opposite the ground plane. An antenna is carried by the housing and operative with the RF circuitry. Audio circuitry is carried by the circuit board and operative with the RF circuitry and processor. An audio transducer assembly is carried by the circuit board and has electrical contacts that electrically engage audio circuitry for carrying audio signals between the audio circuitry and the audio transducer assembly. A filter is mounted at the audio transducer assembly and blocks RF energy from the antenna to the audio transducer assembly to the ground plane and decouples the antenna from the audio transducer assembly and any other components on the circuit board to minimize any detuning of antenna impedance match and degradation in antenna gain.

In one aspect of the invention, the filter is operative for low DC resistance and high impedance from about 500 Mhz to about 3 GHz. The filter can be serially connected within the audio circuitry. The audio transducer assembly includes a transducer housing and the filter is positioned within the transducer housing, or the electrical contacts can be formed as resilient contact pads that engage the audio circuitry and the filter can be located between the audio transducer housing and the resilient contact pads, or the filter can be located adjacent electrical contacts of the audio transducer assembly. The filter may be formed as a ferrite bead, serial inductor or shunt capacitor.

In one embodiment, a receiver audio switch and audio connection lines are part of the audio circuitry and carried by the circuit board. The receiver audio switch can be formed with a detect circuit for detecting when a respective headset is operatively connected to the audio circuitry. A jack can be carried by the housing and jack connection lines can be carried by the circuit board and operatively connected to the jack, processor and receiver audio switch.

A method of the invention is also set forth.

### Brief Description of the Drawings

Other objects, features and advantages of the present invention will become apparent from the detailed description of the invention which follows, when considered in light of the accompanying drawings in which:

FIG. 1 is a schematic block diagram of an example of a mobile wireless communications device configured as a handheld device that can be used with the present invention and illustrating basic internal components thereof.

FIG. 2 is a front elevation view of the mobile wireless communications device of FIG. 1.

FIG. 3 is a schematic block diagram showing basic functional circuit components that can be used in the mobile wireless communications device of FIGS. 1-2.

FIG. 4 is a schematic circuit diagram of an audio circuit operative with an RF circuit in the mobile wireless communications device of FIGS. 1-3, and incorporating RF filters applied to the audio transducer, such as the illustrated receiver speaker, in accordance with the present invention.

FIG. 5 is a schematic circuit diagram of another embodiment of an audio circuit similar to FIG. 4, but having a different circuit footprint.

FIG. 6 is an enlarged view of the speaker section in the schematic circuit diagram of FIG. 4, and showing in detail RF filters located within the audio transducer housing.

FIG. 7 is a schematic circuit diagram similar to FIG. 6, but showing the RF filters located outside the audio transducer housing and serially connected within audio connection lines.

FIG. 8 is a schematic circuit diagram similar to FIG. 6 and showing the RF coupling between the speaker and antenna, which is attenuated by the RF filter contained within the audio transducer housing.

FIG. 9 is a schematic circuit diagram similar to FIG. 7 and showing the RF coupling between the speaker and antenna, which is attenuated by the RF filter outside the audio transducer housing and serially connected within audio connection lines.

FIG. 10 is a fragmentary, side elevation and sectional view of a speaker that could be used in the circuits shown in FIGS. 1-9, and showing possible locations of the RF filter in accordance with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

The RF filter of the invention targets the audio buzz problem created by RF electromagnetic interference on mobile wireless audio transducers, such as a receiver speaker. The RF filter is operative with the audio transducer, for example, attached to the transducer housing, to the transducer electrical contacts, such as resilient (spring) pads, or to the audio circuitry, for example, the audio connection lines, e.g., the signal traces leading to the audio transducer. The RF filter could be RF ferrite beads, serially connected inductors, or shunt capacitors to reduce the RF energy that is picked-up by the transducer. Energy is coupled to the non-linear circuit that could rectify the RF energy. In another aspect, an isolation RF shield as a "can" could surround and isolate the speaker from radiated energy.

In another aspect of the present invention, RF current is blocked from being coupled to the ground plane of the printed circuit board via the electronic components that are located close to an antenna, thus improving the antenna performance. For example, in some wireless mobile communications devices, the audio transducer, e.g., the receiver speaker, is located close to the antenna and couples RF energy from the antenna to the ground plane. This detunes the antenna impedance and degrades antenna gain. The RF filters can also be added serially to both ends of the speaker, which have a low DC resistance to allow normal operation of the speaker, but high impedance over 500 MHz and up to 3 GHz. The addition of the RF filter can block the RF current from being coupled to the ground plane and other circuitry on the printed circuit board and decouple the antenna from any adjacent electronic components. In this manner, the antenna performance is maintained, for example, maintaining impedance match and antenna gain.

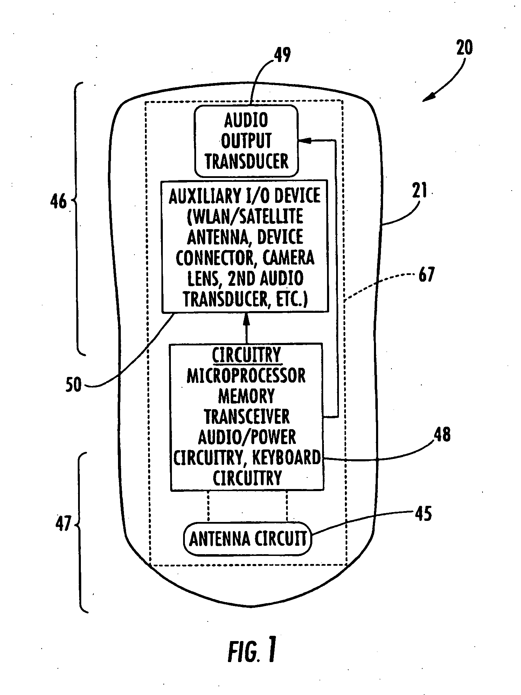

A brief description will now proceed relative to FIGS. 1-3, which disclose an example of a mobile wireless communications device, for example, a handheld portable cellular radio, which can incorporate the non-limiting examples of the various circuits of the present invention. FIGS. 1-3 are representative non-limiting examples of the many different types of functional circuit components and their interconnection, and operative for use with the present invention.

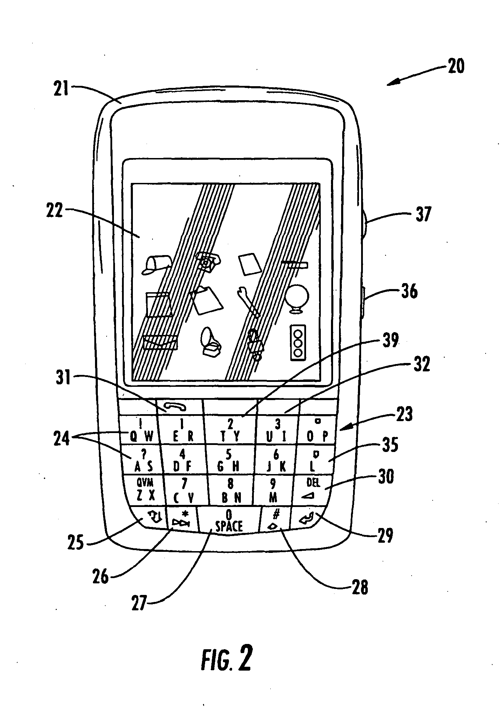

Referring initially to FIGS. 1 and 2, an example of a mobile wireless communications device **20,** such as a handheld portable cellular radio, which can be used with the present invention is first described. This device **20** illustratively includes a housing **21** having an upper portion **46** and a lower portion **47,** and a dielectric substrate (i.e., circuit board) **67,** such as a conventional printed circuit board (PCB) substrate, for example, carried by the housing. A housing cover (not shown in detail) would typically cover the front portion of the housing. The term circuit board **67** as used hereinafter can refer to any dielectric substrate, PCB, ceramic substrate or other circuit carrying structure for carrying signal circuits and electronic components within the mobile wireless communications device **20.** The illustrated housing **21** is a static housing, for example, as opposed to a flip or sliding housing which are used in many cellular telephones. However, these and other housing configurations may also be used.

Circuitry **48** is carried by the circuit board **67,** such as a microprocessor, memory, one or more wireless transceivers (e.g., cellular, WLAN, etc.), which includes RF circuitry, including audio and power circuitry, including any keyboard circuitry. It should be understood that keyboard circuitry could be on a separate keyboard, etc., as will be appreciated by those skilled in the art. A battery (not shown) is also preferably carried by the housing **21** for supplying power to the circuitry **48.** The term RF circuitry could encompass the interoperable RF transceiver circuitry, power circuitry and audio circuitry.

Furthermore, an audio output transducer **49** (e.g., a speaker) is carried by an upper portion **46** of the housing **21** and connected to the circuitry **48.** One or more user input interface devices, such as a keypad (keyboard) **23** (FIG. 2), is also preferably carried by the housing **21** and connected to the circuitry **48.** The term keypad as used herein also refers to the term keyboard, indicating the user input devices having lettered and/or numbered keys commonly known and other embodiments, including multi-top or predictive entry modes. Other examples of user input interface devices include a scroll wheel **37** and a back button **36.** Of course, it will be appreciated that other user input interface devices (e.g., a stylus or touch screen interface) may be used in other embodiments.

An antenna **45** is preferably positioned at the lower portion **47** in the housing and can be formed as a pattern of conductive traces that make an antenna circuit, which physically forms the antenna. It is connected to the circuitry **48** on the main circuit board **67.** In one non-limiting example, the antenna could be formed on an antenna circuit board section that extends from the circuit board at the lower portion of the housing. By placing the antenna **45** adjacent the lower portion **47** of the housing **21,** the distance is advantageously increased between the antenna and the user's head when the phone is in use to aid in complying with applicable SAR requirements. Also, a separate keyboard circuit board could be used.

More particularly, a user will typically hold the upper portion of the housing **21** very close to his head so that the audio output transducer **49** is directly next to his ear. Yet, the lower portion **47** of the housing **21** where an audio input transducer (i.e., microphone) is located need not be placed directly next to a user's mouth, and can be held away from the user's mouth. That is, holding the audio input transducer close to the user's mouth may not only be uncomfortable for the user, but it may also distort the user's voice in some circumstances. In addition, the placement of the antenna **45** adjacent the lower portion **47** of the housing **21** also advantageously spaces the antenna farther away from the user's brain.

Another important benefit of placing the antenna **45** adjacent the lower portion **47** of the housing **21** is that this may allow for less impact on antenna performance due to blockage by a user's hand. That is, users typically hold cellular phones toward the middle to upper portion of the phone housing, and are therefore more likely to put their hands over such an antenna than they are an antenna mounted adjacent the lower portion **47** of the housing **21.** Accordingly, more reliable performance may be achieved from placing the antenna **45** adjacent the lower portion **47** of the housing **21.**

Still another benefit of this configuration is that it provides more room for one or more auxiliary input/output (I/O) devices **50** to be carried at the upper portion **46** of the housing. Furthermore, by separating the antenna **45** from the auxiliary I/O device(s) **50,** this may allow for reduced interference therebetween.

Some examples of auxiliary I/O devices **50** include a WLAN (e.g., Bluetooth, IEEE 802.11) antenna for providing WLAN communication capabilities, and/or a satellite positioning system (e.g., GPS, Galileo, etc.) antenna for providing position location capabilities, as will be appreciated by those skilled in the art. Other examples of auxiliary I/O devices **50** include a second audio output transducer (e.g., a speaker for speaker phone operation), and a camera lens for providing digital camera capabilities, an electrical device connector (e.g., USB, headphone, secure digital (SD) or memory card, etc.).

It should be noted that the term "input/output" as used herein for the auxiliary I/O device(s) **50** means that such devices may have input and/or output capabilities, and they need not provide both in all embodiments. That is, devices such as camera lenses may only receive an optical input, for example, while a headphone jack may only provide an audio output.

The device **20** further illustratively includes a display **22,** for example, a liquid crystal display (LCD) carried by the housing **21** and connected to the circuitry **48.** A back button **36** and scroll wheel **37** can also be connected to the circuitry **48** for allowing a user to navigate menus, text, etc., as will be appreciated by those skilled in the art. The scroll wheel **37** may also be referred to as a "thumb wheel" or a "track wheel" in some instances. The keypad **23** illustratively includes a plurality of multi-symbol keys **24** each having indicia of a plurality of respective symbols thereon. The keypad **23** also illustratively includes an alternate function key **25,** a next key **26,** a space key **27,** a shift key **28,** a return (or enter) key **29,** and a backspace/delete key **30.**

The next key **26** is also used to enter a "*" symbol upon first pressing or actuating the alternate function key **25.** Similarly, the space key **27,** shift key **28** and backspace key **30** are used to enter a "0" and "#", respectively, upon first actuating the alternate function key **25.** The keypad **23** further illustratively includes a send key **31,** an end key **32,** and a convenience (i.e., menu) key **39** for use in placing cellular telephone calls, as will be appreciated by those skilled in the art.

Moreover, the symbols on each key **24** are arranged in top and bottom rows. The symbols in the bottom rows are entered when a user presses a key **24** without first pressing the alternate function key **25,** while the top row symbols are entered by first pressing the alternate function key. As seen in FIG. 2, the multi-symbol keys **24** are arranged in the first three rows on the keypad **23** below the send and end keys **31, 32.** Furthermore, the letter symbols on each of the keys **24** are arranged to define a QWERTY layout. That is, the letters on the keypad **23** are presented in a three-row format, with the letters of each row being in the same order and relative position as in a standard QWERTY keypad.

Each row of keys (including the fourth row of function keys **25-29)** is arranged in five columns. The multi-symbol keys **24** in the second, third, and fourth columns of the first, second, and third rows have numeric indicia thereon (i.e., 1 through 9) accessible by first actuating the alternate function key **25.** Coupled with the next, space, and shift keys **26, 27, 28,** which respectively enter a "*", "0", and "#" upon first actuating the alternate function key **25,** as noted above, this set of keys defines a standard telephone keypad layout, as would be found on a traditional touch-tone telephone, as will be appreciated by those skilled in the art.

Accordingly, the mobile wireless communications device **20** as described may advantageously be used not only as a traditional cellular phone, but it may also be conveniently used for sending and/or receiving data over a cellular or other network, such as Internet and email data, for example. Of course, other keypad configurations may also be used in other embodiments. Multi-tap or predictive entry modes may be used for typing e-mails, etc. as will be appreciated by those skilled in the art.

The antenna **45** is preferably formed as a multi-frequency band antenna, which provides enhanced transmission and reception characteristics over multiple operating frequencies. More particularly, the antenna **45** is designed to provide high gain, desired impedance matching, and meet applicable SAR requirements over a relatively wide bandwidth and multiple cellular frequency bands. By way of example, the antenna **45** preferably operates over five bands, namely a 850 MHz Global System for Mobile Communications (GSM) band, a 900 MHz GSM band, a DCS band, a PCS band, and a WCDMA band (i.e., up to about 2100 MHz), although it may be used for other bands/frequencies as well. To conserve space, the antenna **45** may advantageously be implemented in three dimensions although it may be implemented in two-dimensional or planar embodiments as well.

The mobile wireless communications device shown in FIGS. 1 and 2 can incorporate e-mail and messaging accounts and provide different functions such as composing e-mail, PIN messages, and SMS messages. The device can manage messages through an appropriate menu that can be retrieved by choosing a messages icon. An address book function could add contacts, allow management of an address book, set address book options and manage SIM card phone books. A phone menu could allow for the making and answering of phone calls using different phone features, managing phone call logs, setting phone options, and viewing phone information. A browser application could permit the browsing of web pages, configuring a browser, adding bookmarks, and changing browser options. Other applications could include a task, memo pad, calculator, alarm and games, as well as handheld options with various references.

A calendar icon can be chosen for entering a calendar program that can be used for establishing and managing events such as meetings or appointments. The calendar program could be any type of messaging or appointment/meeting program that allows an organizer to establish an event, for example, an appointment or meeting.

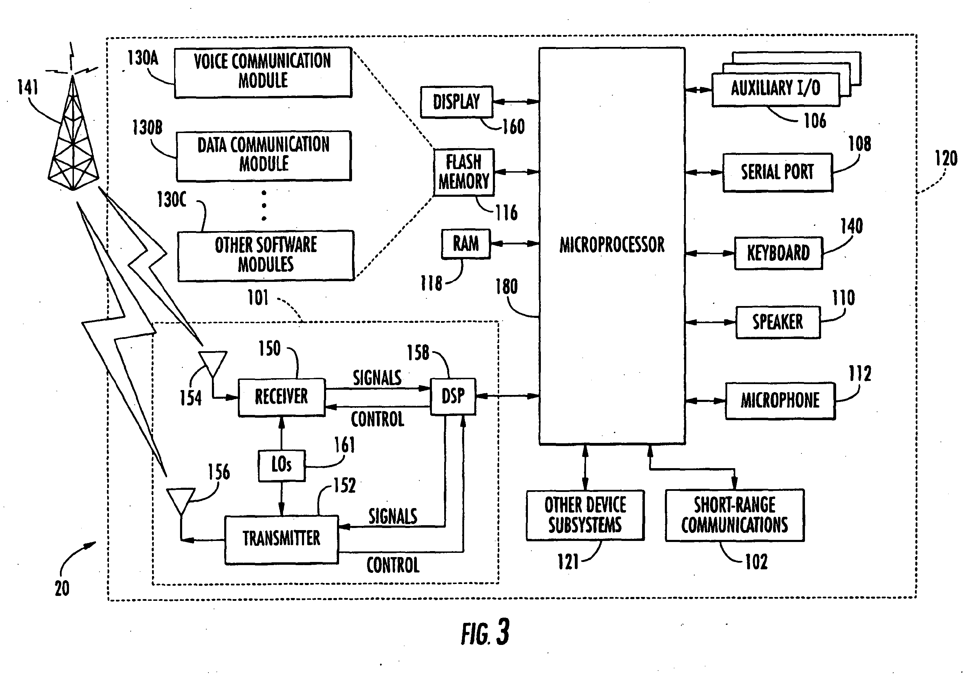

A non-limiting example of various functional components that can be used in the exemplary mobile wireless communications device **20** of FIGS. 1 and 2 is further described in the example below with reference to FIG. 3. The device **20** illustratively includes a housing **120,** a keypad **140** and an output device **160.** The output device **160** shown is preferably a display, which is preferably a full graphic LCD. Other types of output devices may alternatively be used. A processing device **180** is contained within the housing **120** and is coupled between the keypad **140** and the display **160.** The processing device **180** controls the operation of the display **160,** as well as the overall operation of the mobile device **20,** in response to actuation of keys on the keypad **140** by the user.

The housing **120** may be elongated vertically, or may take on other sizes and shapes (including clamshell housing structures). The keypad may include a mode selection key, or other hardware or software for switching between text entry and telephony entry.

In addition to the processing device **180,** other parts of the mobile device **20** are shown schematically in FIG. 3. These include a communications subsystem **101;** a short-range communications subsystem **102;** the keypad **140** and the display **160,** along with other input/output devices **106, 108, 110** and **112;** as well as memory devices **116, 118** and various other device subsystems **121.** The mobile device **20** is preferably a two-way RF communications device having voice and data communications capabilities. In addition, the mobile device **20** preferably has the capability to communicate with other computer systems via the Internet.

Operating system software executed by the processing device **180** is preferably stored in a persistent store, such as the flash memory **116,** but may be stored in other types of memory devices, such as a read only memory (ROM) or similar storage element. In addition, system software, specific device applications, or parts thereof, may be temporarily loaded into a volatile store, such as the random access memory (RAM) **118.** Communications signals received by the mobile device may also be stored in the RAM **118.**

The processing device **180,** in addition to its operating system functions, enables execution of software applications **130A-130N** on the device **20.** A predetermined set of applications that control basic device operations, such as data and voice communications **130A** and **130B,** may be installed on the device **20** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **141.** Preferably, the PIM data items are seamlessly integrated, synchronized and updated via the wireless network **141** with the device user's corresponding data items stored or associated with a host computer system.

Communication functions, including data and voice communications, are performed through the communications subsystem **101,** and possibly through the short-range communications subsystem. The communications subsystem **101** includes a receiver **150,** a transmitter **152,** and one or more antennae **154** and **156.** In addition, the communications subsystem **101** also includes a processing module, such as a digital signal processor (DSP) **158,** and local oscillators (LOs) **161.** The specific design and implementation of the communications subsystem **101** is dependent upon the communications network in which the mobile device **20** is intended to operate. For example, the mobile device **20** may include a communications subsystem **101** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **20.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **20** may send and receive communications signals over the communication network **141.** Signals received from the communications network **141** by the antenna **154** are routed to the receiver **150,** which provides for signal amplification, frequency down conversion, filtering, channel selection, etc., and may also provide analog to digital conversion. Analog-to-digital conversion of the received signal allows the DSP **158** to perform more complex communications functions, such as demodulation and decoding. In a similar manner, signals to be transmitted to the network **141** are processed (e.g., modulated and encoded) by the DSP **158** and are then provided to the transmitter **152** for digital to analog conversion, frequency up conversion, filtering, amplification and transmission to the communication network **141** (or networks) via the antenna **156.**

In addition to processing communications signals, the DSP **158** provides for control of the receiver **150** and the transmitter **152.** For example, gains applied to communications signals in the receiver **150** and transmitter **152** may be adaptively controlled through automatic gain control algorithms implemented in the DSP **158.**

In a data communications mode, a received signal, such as a text message or web page download, is processed by the communications subsystem **101** and is input to the processing device **180.** The received signal is then further processed by the processing device **180** for an output to the display **160,** or alternatively to some other auxiliary I/O device **106.** A device user may also compose data items, such as e-mail messages, using the keypad **140** and/or some other auxiliary I/O device **106,** such as a touchpad, a rocker switch, a thumb-wheel, or some other type of input device. The composed data items may then be transmitted over the communications network **141** via the communications subsystem **101.**

In a voice communications mode, overall operation of the device is substantially similar to the data communications mode, except that received signals are output to a speaker **110,** and signals for transmission are generated by a microphone **112.** Alternative voice or audio I/O subsystems, such as a voice message recording subsystem, may also be implemented on the device **20.** In addition, the display **160** may also be utilized in voice communications mode, for example to display the identity of a calling party, the duration of a voice call, or other voice call related information.

Any short-range communications subsystem enables communication between the mobile device **20** and other proximate systems or devices, which need not necessarily be similar devices. For example, the short-range communications subsystem may include an infrared device and associated circuits and components, or a Bluetooth™ communications module to provide for communication with similarly-enabled systems and devices.

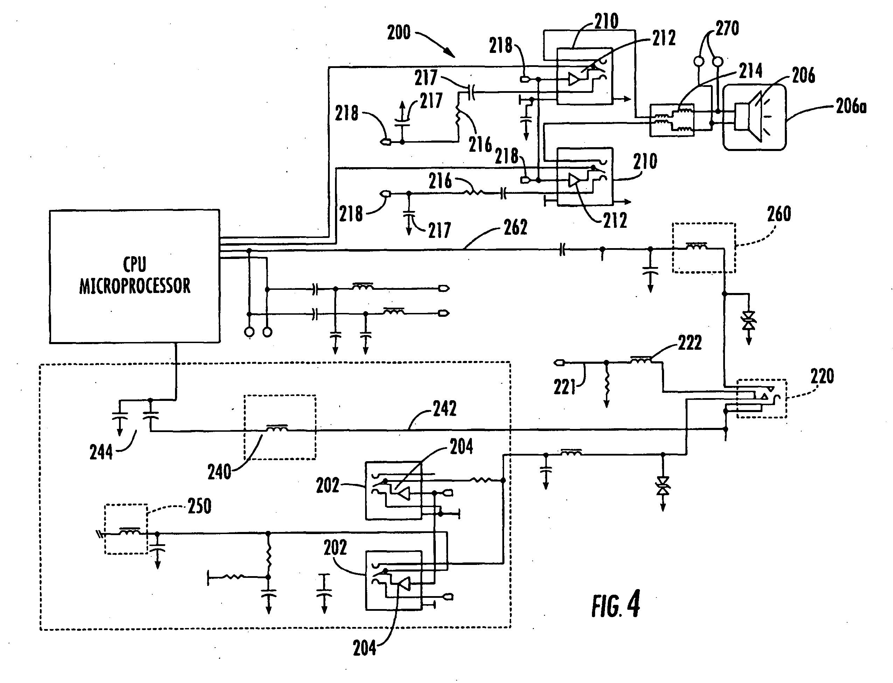

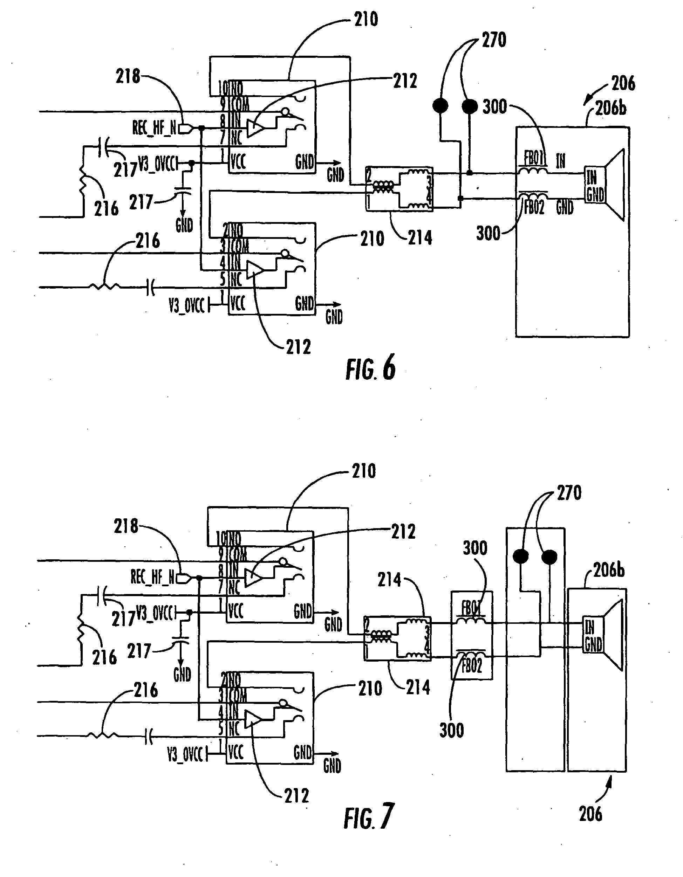

FIG. 4 shows a basic audio circuit **200,** including serial bus connections that can be used for mobile wireless communications device **20** shown in FIGS. 1-3, and includes an audio transducer, such as the receiver speaker **206.** FIGS. 6-9 illustrate different RF components added into or near the receiver speaker **206,** in accordance with the invention. This audio circuit **200** also has certain types of values of filters placed around the device to reduce immunity.

Basic audio components are shown in the dashed rectangular box and include two microphone audio switches **202,** which include a headset detect circuit **204** that is triggered when the headset jack has an external speaker microphone connected thereto. It detects the microphone and switches the lines over. At the audio transducer assembly, hereinafter referred to as the receiver speaker or speaker **206,** are two speaker audio switches **210,** each with a detect circuit **212** that detects when an earphone is connected to switch the line over. An inductor component **214** as a filter is operative with the receiver speaker **206** and the audio switches **210.** As shown in greater detail in the enlarged schematic circuit diagrams in FIGS. 6-9, different resistor **216,** capacitor **217** and terminals **218** are operatively connected to switches **210.**

An example of the audio switch could be a 0.5 ohm/0.8 ohm low-voltage, dual single-pole/double-throw (SPDT) analog switch that could operate from a single 1.8 volt to 5.5 volt supply. An example of such a switch is the Maxim 4684 and 4685, low-on resistance (R on) switches. These switches are packaged in a chip scale package (UCSP) that reduces the required printed circuit board area. A chip of this type typically occupies about 2.0 mm by 1.50 mm area. A 4x3 array of solder bumps can be spaced with a 0.5 mm bump pitch. Proper power-supply sequencing would typically be required for CMOS devices. The different pins could include a normally closed terminal pin, a digitally controlled input pin, an analog switch, common terminal pin, an analog switch normally open terminal pin, a positive supply voltage input pin, and a ground pin.

The receiver speaker could be a 28 mm speaker such as the type WD11903 by Phillips Speaker Systems. It is typically formed with a frame/volume of ABS/SAN, and a cone formed from polycarbonate (PC). The cone color could be yellow transparent and the weight is about 4.9 grams. The diameter is 28 mm. The magnet could be formed from NdFeB material and is about 12 mm. The speaker could include a resilient contact pad forming a spring-contact connection, and a parallel ZU PCB gasket and a PC RING. This type of speaker could operate at a range of about 560 Hz to 5,000 Hz and typically within the voice range. It would have a resonant frequency of about 700 Hz and a voice coil resistance of about 7.3 Ohms. It could use about 1 watt maximum short term power and a maximum noise power of about 0.5 watts continuous.

To provide the speaker **206** with RF isolation, FIG. 4 shows that a radio frequency isolation shield **206a** can form an isolation "can," i.e., an isolation compartment at that area of the circuit board in which the speaker is mounted. This RF shield **206a** could be formed as a separate metallic housing secured to the circuit board and surrounding the speaker, effectively covering, i.e., shielding the entire speaker. Naturally, some porous holes could be provided to allow sound to escape. Although a "can" configuration formed as a metallic housing with top and sides can be used for the RF shield **206a,** other configurations could be used. The receiver is typically and preferably, in one aspect, a surface mounted receiver such as the receiver speaker described above. This RF shield provides the necessary isolation from the RF amplifiers, power circuitry, radiated antenna energy, and other interfering RF energy that could create an audible buzz within the speaker.

In another aspect of the invention described below, the RF filter could be ferrite beads, bypass capacitors, or serial inductors and placed within the speaker housing or outside the speaker and connected into the audio connection lines. It should be understood that the term "speaker" could also be synonymous with any type of audio transducer assembly that is carried by the housing of the wireless communications device, but typically mounted on the circuit board.

Different types, sizes and shapes of ferrite beads can be used. Typically, a ferrite bead is formed from a material having a permeability controlled by the composition of the different oxides, for example, a ferric oxide, sometimes with nickel and zinc added. The ferrite beads can sometimes be formed as ferrite sleeves with two half parts that are added onto a signal line or a solder overcoat on a signal trace. Typically, the longer the bead, the better the RF suppression. The bead equivalent circuit can be a series resistor and inductor.

A physical jack is indicated at **220** and receives a jack input and connects to headset detect line and terminal **221,** which also includes a serially connected inductor **222.** The described components are connected together and operative with the microprocessor and other components, for example, various inductors, diodes, capacitors, resistors, and associated circuit components.

To increase the immunity (i.e., reduce the susceptibility) of the device 20 to electromagnetic interference (EMI), a plurality of EMI filters are added to the audio and/or serial bus circuit **200** of the communications device **20.** As shown in FIG. 4, for example, choke filters (i.e., inductors) can include respective individual inductors for this purpose. A choke filter **240** is operatively connected into connection line **242** between the physical jack **220** and the microprocessor **180.** This connection line **242** includes a capacitor circuit **244.** Another choke filter **250** is operatively connected to the microphone audio switches **202.** Yet another choke filter **260** is operatively connected to the physical jack **220** and the microprocessor **180** on a connection line **262.** Although the inductor or choke filters as illustrated and positioned in the respective selected circuit positions, it should be understood that other filters can be used for the present invention.

Other basic components included in FIG. 4 include the test points **270** near the receiver speaker **206.**

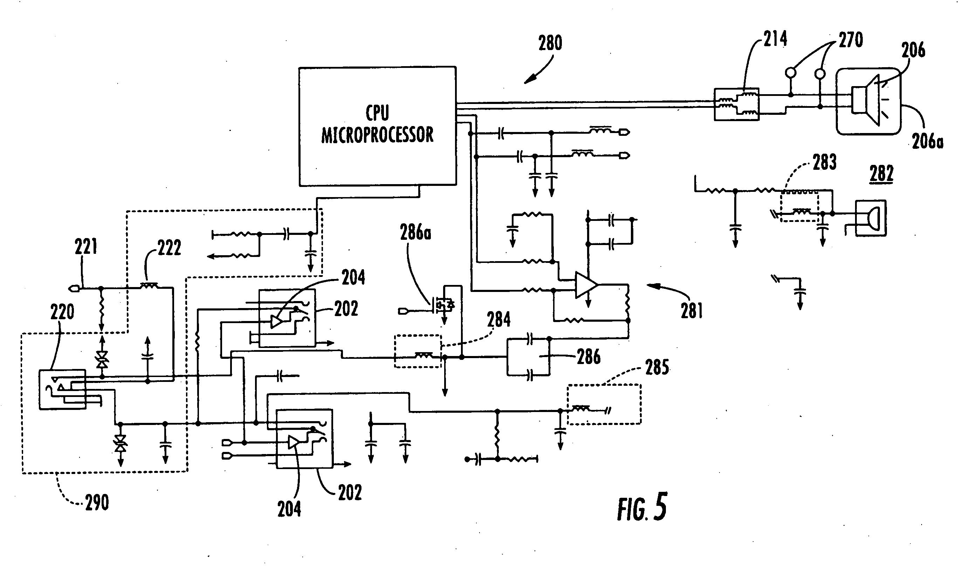

FIG. 5 is a schematic circuit diagram for an audio circuit **280** similar to that shown in FIG. 4, including serial bus connections and having another circuit footprint, such as for a mobile wireless communications device **20,** and showing similar components in a different configuration. Any similar components have been given the same reference numeral. This circuit **280** also includes an operational amplifier circuit **281** operatively connected to the microprocessor **180** and operative as a filter or buffer. FIG. 5 also shows a microphone circuit **282,** which would be operative with microphone audio switches **202,** even though in this fragmentary schematic circuit diagram it is shown separate. Choke filter **283** is operatively connected to the microphone circuit **282.** A choke filter **284** is operatively connected to the physical jack **220** and the operational amplifier circuit **281.** Another choke filter **285** is operatively connected to a microphone audio switch **202.** Other circuit components can be connected as illustrated in this non-limiting example.

The choke filters are advantageously used at the frequency band about 40 MHz, which has a strong impact on the immunity performance of the radio. Critical spots are selectively chosen for these ESP filters designed in these examples as choke filters. A capacitor circuit **286** is connected between operational amplifier **281** and input jack **220** for determining connection. A transistor circuit **286a** is included in this design and operatively connected between the operational amplifier circuit **281** and into connection lines for the filter **284** and input jack **220.** The circuit **280** includes other components that are connected as illustrated in this non-limiting example.

By way of example, the choke filters as described with reference to FIGS. 4 and 5 could be ferrite filters, for example, ferrite beads, although other suitable filter components and/or materials may also be used, as will be appreciated by those skilled in the art. In addition to positioning the EMI filters to reduce unwanted interference, other components connected to the audio and/or serial bus circuitry can be scrutinized to determine if interference susceptibility effects.

The use of the added choke filters advantageously reduces conducted interfering energy introduced to the audio components via a serial (i.e., USB) charging cable and other sources. This further reduces radiated interfering RF energy introduced to the audio components via the microphone **112** (FIG. 3) or the microphone of a connected headset, for example.

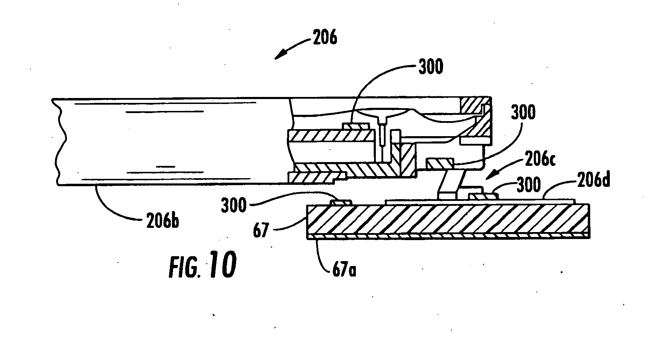

As illustrated in FIG. 10, the transducer, e.g., the speaker in this example, includes a speaker housing **206b.** The various components of the speaker as described above are contained in the housing. Other components could include an electrical contact **206c** that engages the audio circuitry, such as the audio connection lines. The contact is typically formed as a spring contact having a contact pad member **206d.** The enlarged view also shows that any contact pad **206d** is surface mounted on the circuit board **67.** The RF ground plane **67a** is shown positioned on the underside of the circuit board. The pad can be formed large to obtain good conductive contact between the various components of the speaker **206** and the audio circuitry.

As illustrated, a filter **300** is mounted at the audio transducer assembly, e.g., the receiver speaker **206,** and reduces the radio frequency (RF) electromagnetic interference of the audio transducer assembly during device operation. Although the filter **300** could be an RF shield as shown in FIGS. 4 and 5, in FIGS. 6-9, the filter is a discrete component. As shown in FIG. 6, the filter **300** can be formed as two filter components added serially into the "in" speaker line and "ground" speaker line and positioned within the receiver or audio transducer housing **206b.** The filter **300** can also be serially connected within the audio circuitry at the electrical contact and positioned outside the housing as shown in FIG. 7. In one aspect of the invention, the speaker or transducer assembly **206** includes the resilient electrical contact pads **206d** that engage audio circuitry such as the audio signal lines or signal traces on a circuit board **67.**

FIG. 10 shows different places where the filter could be located, including on the circuit board **67** adjacent the electrical contact formed as a contact pad **206d,** between the contact pad **206d** and housing **206b,** or within the housing at an opportune location as indicated abstractly in FIG. 10.

In one aspect of the invention, the filter **300** could be formed as a ferrite bead or as a surface mounted filter device positioned adjacent the electrical contacts and engaging the signal traces of the audio connection lines. The filter could also be formed as a serial inductor or shunt capacitor and placed appropriately into the circuit adjacent the speaker for maximum effect.

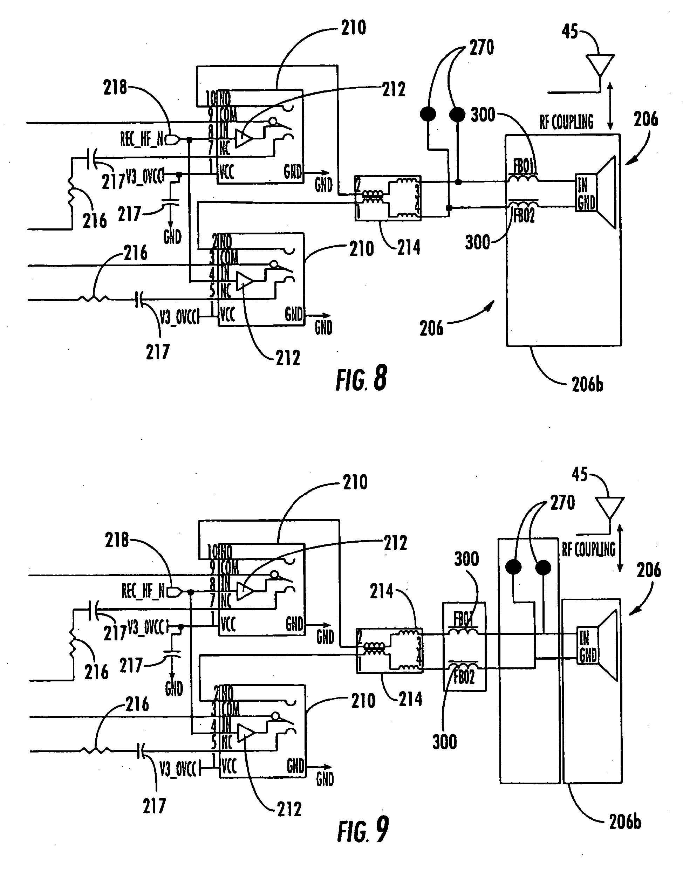

FIGS. 8 and 9 are similar to respective FIGS. 6 and 7, but show that the RF filter **300** is operative for improving antenna performance by blocking RF current from being coupled to the ground plane **67a** of the printed circuit board by the close and adjacent electronic components. The speaker **206** can be located close to the antenna and couple RF energy from the antenna to the ground plane and cause antenna impedance match detuning and antenna gain degradation. The RF filter, such as RF EMI ferrite beads **300,** are serially connected to both ends of the speaker and have low DC resistance to allow normal operation of the speaker, but have high impedance over 500 MHz up to about 3 GHz. The RF current is effectively blocked from being coupled to the ground plane and other circuitry on the printed circuit board and decoupling the antenna from adjacent electronic components. Thus, the antenna performance, such as impedance matching antenna gain is maintained by the invention.

This application is related to copending patent application entitled, **"MOBILE WIRELESS COMMUNICATIONS DEVICE HAVING IMPROVED RF IMMUNITY OF AUDIO TRANSDUCERS TO ELECTROMAGNETIC INTERFERENCE (EMI)"** which is filed on the same date and by the same assignee and inventors.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (20) comprising:
a housing (21);
a circuit board (67) having a ground plane (67a) and carried by the housing (21);
radio frequency (RF) circuitry and a processor operative with each other and carried by the circuit board;
an antenna (154, 156) carried by the housing and operative with the RF circuitry;
audio circuitry (280) carried by the circuit board and operative with the RF circuitry and processor;
an audio transducer assembly (206) carried by the circuit board and having electrical contacts (206c) that electrically engage the audio circuitry (280) for carrying audio signals between the audio circuitry and the audio transducer assembly; and
a filter (300) mounted at the audio transducer assembly (206) configured to block RF energy from the antenna (154, 156) through the audio transducer assembly (206) to the ground plane (67a) and decouple the antenna (154, 156) from the audio transducer assembly (206) and any other components on the circuit board (67) to minimize any detuning of antenna impedance match and degradation in antenna gain; wherein said audio transducer assembly (206) includes a transducer housing (206b);
wherein said filter (300) is positioned within said transducer housing (206b); or
wherein said electrical contacts (206c) comprise resilient contact pads (206d) that engage the audio circuitry and said filter (300) is located between said audio transducer housing (206b) and said resilient contact pads (206d).

2. A mobile wireless communications device according to Claim 1, wherein said filter (300) is operative for low DC resistance and high impedance from about 500 MHz to about 3 GHz.

3. A mobile wireless communications device according to Claim 1, wherein said filter (300) comprises a ferrite bead.

4. A mobile wireless communications device according to Claim 1, wherein said filter (300) comprises a serial inductor or shunt capacitor.

5. A method of manufacturing a mobile wireless communications device, which comprises:
providing a housing (21), a circuit board (67) having a ground plane (67a) and carried by the housing (21), radio frequency (RF) circuitry and a processor operative with each other and carried by the circuit board (67), an antenna (154, 156) carried by the housing (21) and operative with the RF circuitry, audio circuitry (280) carried by the circuit board and operative with the RF circuitry and processor, and an audio transducer assembly (206) carried by the circuit board (67) and having electrical contacts (206c) that electrically engage audio circuitry (280) for carrying audio signals between the audio circuitry (280) and the audio transducer assembly (206); and
mounting a filter (300) at the audio transducer assembly (206) configured to block RF energy from the antenna through the speaker to the ground plane and decoupling the antenna (154, 156) from the speaker and any other components on the circuit board (67) to minimize any detuning of antenna impedance match and degradation in antenna gain; and which further comprises:
positioning the filter (300) within a housing (206b) of the audio transducer assembly (206); or
positioning the filter (300) between a housing (206b) of the audio transducer assembly (206) and a resilient contact pad (206c) forming the electrical contacts.

6. A method according to Claim 11, which further comprises mounting a filter (300) that is operative for low DC resistance and high impedance over about 500 MHz to about 3 GHz.

7. A method according to Claim 11, which further comprises forming the filter (300) as a ferrite bead, shunt capacitor or serial inductor.

## Patentansprüche

1. Ein mobiles drahtloses Kommunikationsgerät (20), welches umfasst:
ein Gehäuse (21);
eine Leiterplatte (67), welche eine Grundplatte (67a) hat und durch das Gehäuse (21) getragen wird;
Funkfrequenz (RF) Schaltung und einen Prozessor, welche miteinander betrieben werden können und welche durch die Leiterplatte getragen werden;
eine Antenne (154, 156), welche durch das Gehäuse getragen wird und welche mit der RF Schaltung betrieben werden kann;
eine Audioschaltung (280), welche durch die Leiterplatte getragen wird und mit der RF Schaltung und dem Prozessor betrieben werden kann;
eine Audioumsetzer-Anordnung (206), welche durch die Leiterplatte getragen wird und welche elektrische Kontakte (206c) hat, die elektrisch mit der Audioschaltung (280) in Verbindung stehen, zum Übertragen von Audiosignalen zwischen der Audioschaltung und der Audioumsetzer-Anordnung; und
einen Filter (300), welcher bei der Audioumsetzer-Anordnung (206) montiert ist und derart konfiguriert ist, dass er RF-Energie von der Antenne (154, 156) über die Audioumsetzer-Anordnung (206) an die Grundplatte (67a) blockiert und die Antenne (154, 156) von der Audioumsetzer-Anordnung (206) und jeglicher anderer Komponenten auf der Leiterplatte (67) entkoppelt, um jegliche Verstimmung des Antennenimpedanzabgleichs und Verschlechterung der Antennenverstärkung zu minimieren; wobei die besagte Audioumsetzer-Anordnung (206) ein Umsetzergehäuse (206b) umfasst;
wobei der besagte Filter (300) innerhalb des besagten Umsetzergehäuses (206b) positioniert ist; oder
wobei die besagten elektrischen Kontakte (206c) elastische Kontaktbeläge (206d) umfassen, welche mit der Audioschaltung in Verbindung stehen und wobei der besagte Filter (300) zwischen dem besagten Audioumsetzer-Gehäuse (206b) und den besagten elastischen Kontaktbelägen (206d) angeordnet ist.

2. Ein mobiles drahtloses Kommunikationsgerät gemäß Anspruch 1, wobei der besagte Filter (300) mit niedrigem DC Widerstand und hoher Impedanz von ungefähr 500 MHz bis ungefähr 3 GHz betrieben werden kann.

3. Ein mobiles drahtloses Kommunikationsgerät gemäß Anspruch 1, wobei der besagte Filter (300) eine Ferritperle umfasst.

4. Ein mobiles drahtloses Kommunikationsgerät gemäß Anspruch 1, wobei der besagte Filter (300) einen seriellen Induktor oder Shunt-Kondensator umfasst.

5. Ein Verfahren zur Herstellung eines mobilen drahtlosen Kommunikationsgerätes, welches umfasst:
Liefern eines Gehäuses (21), einer Leiterplatte (67), welche eine Grundplatte (67a) hat und durch das Gehäuse (21) getragen wird, einer Funkfrequenz- (RF) Schaltung und eines Prozessors, welche miteinander betrieben werden können und welche durch die Leiterplatte (67) getragen werden, einer Antenne (154, 156), welche durch das Gehäuse (21) getragen wird und mit der RF-Schaltung betrieben werden kann, einer Audioschaltung (280), welche durch die Leiterplatte getragen wird und mit der RF-Schaltung und dem Prozessor betrieben werden kann, und einer Audioumsetzer-Anordnung (206), welche durch die Leiterplatte (67) getragen wird und elektrische Kontakte (206c) hat, die elektrisch mit der Audioschaltung (280) in Verbindung stehen, um Audiosignale zwischen der Audioschaltung (280) und der Audioumsetzer-Anordnung (206) zu übertragen; und
Montieren eines Filters (300) bei der Audioumsetzer-Anordnung (206), welcher konfiguriert ist, um RF Energie von der Antenne über den Lautsprecher an die Grundplatte zu blockieren und die Antenne (154, 156) von dem Lautsprecher und jeglicher anderen Komponenten auf der Leiterplatte (67) zu entkoppeln, um jegliche Verstimmung des Antennenimpedanzabgleichs und Verschlechterung der Antennenverstärkung zu minimieren; und welches weiter umfasst:
Positionieren des Filters (300) in dem Gehäuse (206b) der Audioumsetzer-Anordnung (206); oder
Positionieren des Filters (300) zwischen dem Gehäuse (206b) der Audioumsetzer-Anordnung (206) und eines elastischen Kontaktbelags (206c), welcher die elektrischen Kontakte darstellt.

6. Ein Verfahren gemäß Anspruch 5, welches weiter das Montieren eines Filters (300) umfasst, welcher für niedrigen DC Widerstand und hoher Impedanz über ungefähr 500 MHz bis ungefähr 3 GHz betrieben werden kann.

7. Ein Verfahren gemäß Anspruch 5, welches weiter die Erstellung eines Filters (300) als eine Ferritperle, Shunt-Kondensator oder serieller Induktor umfasst.

## Revendications

1. Dispositif de communication mobile sans fil (20) comportant :
un boîtier (21) ;
une plaquette à circuit (67) ayant un plan de masse (67a) et portée par le boîtier (21) ;
un circuit radiofréquence (RF) et un processeur fonctionnant ensemble et portés par la plaquette à circuit ;
une antenne (154, 156) portée par le boîtier et fonctionnant avec le circuit RF ;
un circuit audio (280) porté par la plaquette à circuit et fonctionnant avec le circuit RF et le processeur ;
un ensemble à transducteur audio (206) porté par la plaquette à circuit et ayant des contacts électriques (206c) qui engagent électriquement le circuit audio (280) pour transporter des signaux audio entre le circuit audio et l'ensemble à transducteur audio ; et
un filtre (300) monté à l'ensemble à transducteur audio (206), configuré pour arrêter de l'énergie RF provenant de l'antenne (154, 156) en passant par l'ensemble à transducteur audio (206) vers le plan de masse (67a) et pour découpler l'antenne (154, 156) de l'ensemble à transducteur audio (206) et de tous autres composants se trouvant sur la plaquette à circuit (67) afin de minimiser tout désaccord de l'adaptation d'impédance d'antenne et toute dégradation du gain d'antenne ; dans lequel ledit ensemble à transducteur audio (206) comprend un boîtier (206b) de transducteur ;
dans lequel ledit filtre (300) est positionné à l'intérieur dudit boîtier (206b) de transducteur ; ou
dans lequel lesdits contacts électriques (206c) comprennent des plots élastiques (206d) de contact qui engagent le circuit audio et ledit filtre (300) est placé entre ledit boîtier (206b) de transducteur audio et lesdits plots élastiques (206d) de contact.

2. Dispositif de communication mobile sans fil selon la revendication 1, dans lequel ledit filtre (300) agit pour établir une basse résistance en courant continu et une haute impédance d'environ 500 MHz à environ 3 GHz.

3. Dispositif de communication mobile sans fil selon la revendication 1, dans lequel ledit filtre (300) comprend une perle de ferrite.

4. Dispositif de communication mobile sans fil selon la revendication 1, dans lequel ledit filtre (300) comporte une inductance en série ou un condensateur en dérivation.

5. Procédé de fabrication d'un dispositif de communication mobile sans fil, qui comprend :
l'utilisation d'un boîtier (21), d'une plaquette à circuit (67) ayant un plan de masse (67a) et portée par le boîtier (21), d'un circuit radiofréquence (RF) et d'un processeur fonctionnant ensemble et portés par la plaquette à circuit (67), d'une antenne (154, 156) portée par le boîtier (21) et fonctionnant avec le circuit RF, d'un circuit audio (280) porté par la plaquette à circuit et fonctionnant avec le circuit RF et le processeur, et d'un ensemble à transducteur audio (206) porté par la plaquette à circuit (67) et ayant des contacts électriques (206c) qui engagent électriquement le circuit audio (280) pour transmettre des signaux audio entre le circuit audio (280) et l'ensemble à transducteur audio (206) ; et
le montage d'un filtre (300) à l'ensemble à transducteur audio (206), configuré pour arrêter de l'énergie RF provenant de l'antenne en passant par le haut-parleur vers le plan de masse et pour découpler l'antenne (154, 156) du haut-parleur et de tous autres composants se trouvant sur la plaquette à circuit (67) afin de minimiser tout désaccord de l'adaptation d'impédance d'antenne et toute dégradation du gain d'antenne ; et qui comprend en outre :
le positionnement du filtre (300) à l'intérieur d'un boîtier (206b) de l'ensemble (206) à transducteur audio ; ou
le positionnement du filtre (300) entre un boîtier (206b) de l'ensemble (206) à transducteur audio et un plot élastique (206c) de contact formant les contacts électriques.

6. Procédé selon la revendication 11, qui comprend en outre le montage d'un filtre (300) qui fonctionne de façon à établir une basse résistance en courant continu et une haute impédance sur environ 500 MHz à environ 3 GHz.

7. Procédé selon la revendication 11, qui comprend en outre la formation du filtre (300) sous la forme d'une perle de ferrite, d'un condensateur de dérivation ou d'une inductance en série.
